**Europäisches Patentamt**

**European Patent Office**

**Office européen des brevets**

(19)

(11) Veröffentlichungsnummer: **0 086 952**

**A1**

(12) # EUROPÄISCHE PATENTANMELDUNG

(21) Anmeldenummer: **83100422.1**

(22) Anmeldetag: **19.01.83**

(51) Int. Cl.³: **G 11 B 5/12**
**G 11 B 5/20**

(30) Priorität: **06.02.82 DE 3204183**

(43) Veröffentlichungstag der Anmeldung:
**31.08.83 Patentblatt 83/35**

(84) Benannte Vertragsstaaten:
**DE FR GB NL**

(71) Anmelder: **ROBERT BOSCH GMBH**
**Postfach 50**
**D-7000 Stuttgart 1(DE)**

(72) Erfinder: **Neuffer, Kurt, Dr. Dipl.-Ing.**
**Ob. Bauernwaldweg 39**
**D-7000 Stuttgart 1(DE)**

(54) Dünnschicht-Magnetkopf.

(57) Es wird ein Dünnschicht-Magnetkopf vorgeschlagen, welcher nach dem Induktionsprinzip arbeitet und insbesondere zur Aufzeichnung in Mehrspuranordnungen geeignet ist. Der Kopf besitzt ein Magnetjoch (11), welches einerseits aus einem magnetischen Substrat (15) und andererseits aus einer dünnen Magnetschicht (18) gebildet wird. Die den Schreibstrom führende Leiterbahn (12) ist in einer Aussparung (16) des magnetischen Substrates (15) angeordnet, wodurch sich ein besonders günstiger, stufenarmer Schichtaufbau ergibt.

FIG.1

FIG.2

EP 0 086 952 A1

R.   17 21

4.2.1982 Rs/Hm

ROBERT BOSCH GMBH, 7000 STUTTGART 1

Dünnschicht-Magnetkopf

Stand der Technik

Die Erfindung geht aus von einem Dünnschicht-Magnetkopf
nach der Gattung des Hauptanspruches. Ein derartiger
Magnetkopf ist bereits beschrieben worden (IEEE
Transactions on Magnetics, Vol. MAG-15, No. 3, 1979).
Bei dieser bekannten Anordnung wird eine Aussparung
in einem magnetischen Substrat mit elektrisch und magnetisch isolierender Masse gefüllt, um den Wirkungsgrad
des Magnetkopfes dadurch zu erhöhen, daß ein möglichst
großer Abstand zwischen der oberen und der unteren
Magnetschicht entsteht. Die zur Erzeugung der magnetischen Feldstärke am Spalt durch das Joch hindurchgeführte Leiterbahn ist bei der bekannten Anordnung
auf das Füllmaterial aufgebracht, welches bündig mit
dem magnetischen Substrat abschließt. Bei dieser Anordnung muß sowohl die elektrische Isolation über der
Leiterbahn als auch die zweite Magnetschicht über die
Leiterbahn hinweggeführt werden, wodurch unerwünschte
Strukturkanten entstehen, welche insbesondere die Eigenschaft der Magnetschicht durch Sättigungserscheinungen

0086952

im Bereich unzulässig geringer Querschnitte beeinträchtigen können.

Vorteile der Erfindung

Der erfindungsgemäße Dünnschicht-Mehrspur-Magnetkopf mit den kennzeichnenden Merkmalen des Hauptanspruchs hat demgegenüber den Vorteil, daß ein wesentlich günstigerer Schichtaufbau entsteht, bei dem die Dicke der Leiterbahn und die Stufenhöhe für die Magnetschicht voneinander unabhängig sind. Auf diese Weise kann ein ausreichend dicker Querschnitt für die Leiterbahn gewählt werden, welcher besonders bei einer Anordnung mit nur einer Windung erforderlich ist. Die obere, als Dünnschicht ausgebildete Magnetschicht braucht nur eine kleine Stufe der elektrisch isolierenden Schicht, die gleichzeitig die Spaltfüllung bildet, zu überwinden, so daß Schrägen und die dort aufgrund von Querschnittsverringerungen auftretenden Sättigungserscheinigungen weitestgehend vermieden werden. Außerdem schließen das magnetische Substrat, die den Spalt definierende Isolierschicht, die obere Magnetschicht, eine Schutzschicht und eine darüberliegende Abdeckung bündig ohne Zwischenräume am Aufzeichnungsspalt ab, wodurch Beschädigungen oder Auswaschungen einer weichen Klebeschicht durch den vorbeigeführten Aufzeichnungsträger vermieden werden.

Durch die in den Unteransprüchen aufgeführten Maßnahmen sind vorteilhafte Weiterbildungen und Verbesserungen des im Hauptanspruch angegebenen Magnetkopfes möglich. Besonders vorteilhaft ist beispielsweise die Herstellung der Aussparung durch das Verfahren der Ionenstrahlätzung. Dieses Verfahren hat den Vorteil, daß sich eine Feinstruktur mit scharfen Kanten exakt herstellen läßt, wobei insbesondere auch die Neigung der Kanten präzise vorherbestimmbar ist. Zur Vereinfachung des Herstellungsprozesses des Magnetkopfes wird zweckmäßigerweise ein magnetisches Substrat aus elektrisch isolierendem magnetischen, vorzugsweise ferritischen Material verwendet. Durch das Einbringen der Aussparung in elektrisch isolierendes Material wird verfahrensmäßig das Aufbringen einer Isolierschicht eingespart. Andererseits kommt jedoch auch die Verwendung elektrisch leitfähiger mangetischer Substrate in Frage; derartige elektrisch leitfähige Substrate besitzen teilweise sehr gute magnetische Eigenschaften, weshalb man in speziellen Fällen bereit ist, den zusätzlichen Aufwand für das Aufbringen einer Isolationsschicht zwischen dem Magnetsubstrat und der Leiterbahn in Kauf zu nehmen. Zum Herstellen der Schichtenfolge aus Leiterbahn, Isolierschicht und dünner Magnetschicht eignet sich insbesondere die Anwendung von Vakuum-Aufdampfverfahren, wobei die verschiedenen Schichten gegebenenfalls im gleichen Vakuum in aufeinanderfolgenden Prozessen erzeugt werden können. Dieses Verfahren eignet sich insbesondere auch zur Aufbringung der elektrisch nichtleitenden Isolierschicht zwischen der Leiterbahn und der oberen Magnetschicht, welch letztere auch durch Kathodenzerstäubung oder in einem galvanischen Prozeß aufgebracht werden können.

Zeichnung

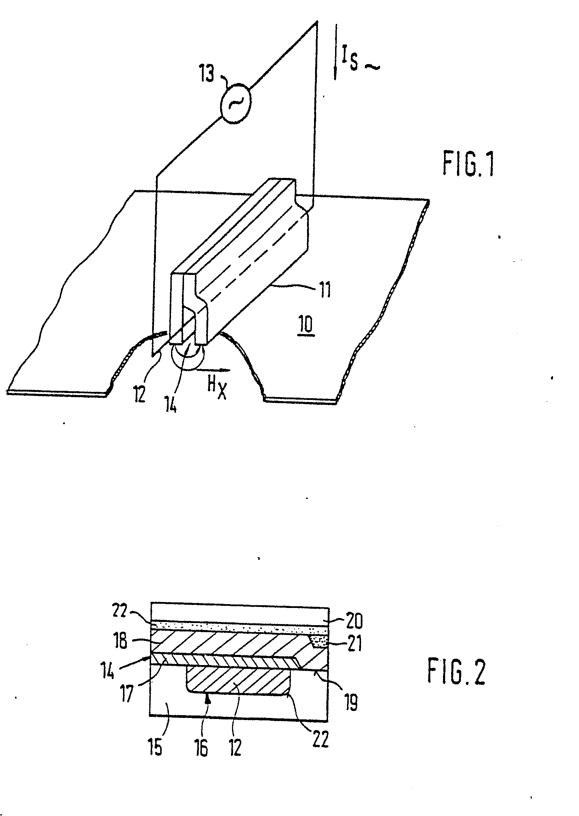

Ein Ausführungsbeispiel der Erfindung ist in der Zeichnung schematisch dargestellt und in der nachfolgenden Beschreibung erläutert. Es zeigen: Figur 1 ein Prinzipschaltbild des erfindungsgemäßen Magnetkopfes und Figur 2 den Aufbau der verschiedenen Schichten des Magnetkopfes.

Berschreibung des Ausführungsbeispieles

In Figur 1 ist mit 10 ein magnetisierbarer Aufzeichnungsträger bezeichnet, welcher an einem Magnetjoch 11 vorbeigeführt wird. Durch das Magnetjoch führt eine Leiterbahn 12 zur Erzeugung einer schwankenden magnetischen
Feldstärke $H_x$ in Abhängigkeit vom Signalstrom $I_S$ welcher
von einer Signalquelle 13 erzeugt wird. Mit 14 ist der
Spalt des Magnetjoches 11 bezeichnet.

Die zuvor beschriebene Anordnung arbeitet nach dem Induktionsprinzip, wobei der schwankende Signalstrom $I_S$ eine
proportional schwankende magnetische Feldstärke $H_x$ erzeugt, welche bleibende Magnetisierungen auf dem magnetischen Aufzeichnungsträger 10 in der jeweiligen Spur
erzeugt. Der gesamte Magnetkopf besteht aus einer Mehrzahl, beispielsweise aus 12 nebeneinander angeordneten
Dünnschicht-Magnetköpfen der gezeigten Art, deren Spalte
14 hintereinander liegen. Eine derartige induktive Anordnung eignet sich insbesondere zum Aufzeichnen von
Signalen, jedoch ist bei hinreichend großer Relativgeschwindigkeit zwischen Kopf und Informationsträger
(Platte, Band) auch bei einer Anordnung mit nur einer
Windung auch ein ausreichendes Lesesignal erzeugbar,
so daß der Kopf auch zum Abfragen der auf dem Aufzeichnungsträger 10 gespeicherten Informationen benutzt werden kann.

Figur 2 zeigt einen Schnitt durch den Dünnschicht-
Mehrspur-Magnetkopf. Hierin ist mit 15 ein magnetisches
Substrat bezeichnet, in das durch Ionenstrahlätzung
eine Aussparung 16 eingebracht ist. Das magnetische
Substrat 15 besteht vorzugsweise aus elektrisch isolierendem magnetischen Material, beispielsweise aus
NiZn-Ferrit.

In der Aussparung 16 liegt die Leiterbahn 12 welche durch Aufdampfen, durch Kathodenzerstäubung oder galvanisch eingebracht werden kann. Die Leiterbahn 12 wird derart bearbeitet, daß sie bündig mit dem magnetischen Substrat 15 abschließt und eine glatte Oberfläche aufweist. Hierauf wird eine elektrisch isolierende Schicht 17, beispielsweise ebenfalls durch Aufdampfen, aufgebracht, die vorzugsweise in einer Schichtdicke < 1 um gleichzeitig die Füllung des Kopfspaltes darstellt. Auf ihr liegt eine zweite, als Dünnschicht ausgebildete Magnetschicht 18. Diese obere Magnetschicht 18 ist bei 19 mit dem magnetischen Substrat 15 kurzgeschlossen, bei 14 bildet sie den magnetisch wirksamen Spalt zwischen dem magnetischen Substrat 15 und der Magnetschicht 18. Schließlich ist auf die Magnetschicht 18 noch eine Schutzschicht 23 und eine Abdeckung 20 aufgebracht als mechanischer Schutz der Anordnung. Die Abdeckung 20 ist auf der dem Spalt gegenüberliegenden Seite durch Klebstoff 21 oder durch eine Glas-Bondtechnik mit der restlichen Anordnung verbunden.

Das magnetische Substrat 15 kann auch aus elektrisch leitfähigem magnetischem Material hergestellt werden. Hierdurch wird die Materialauswahl wesentlich erweitert um Materialien mit besseren magnetischen Eigenschaften (z.B. die unter der Bezeichnung SENDUST oder ALFESIL bekannte Al-Fe-Si-Legierung) bezüglich relativer Permeabilität und Sättigungsflußdichte bzw. Abriebfestigkeit (Einkristall-Ferrite). Im Fall der Verwendung eines leitfähigen Substrates wird zwischen das Substrat 15 und die Leiterbahn 12 eine Isolationsschicht 22 eingebracht, welche beispielsweise aus $SiO_2$ oder $Al_2O_3$ bestehen kann.

Sobald der Signalstrom $I_S$ durch die Leiterbahn 12 fließt entsteht in dem Joch 11 ein magnetischer Fluß mit schwankender magnetischer Feldstärke Hx am Spalt 14,

...

an dem der magnetisierbare Aufzeichnungsträger 10 in vertikaler Richtung vorbeigeführt wird. Die magnetische Feldstärke $H_X$ erzeugt jeweils für eine Spur auf dem magnetisierbaren Träger 10 die später wieder abfragbare Aufzeichnung. Die Oberfläche des magnetischen Substrates 15 und der Leiterbahn 12 ist planpoliert. Auf ihr wird eine besonders harte, elektrisch isolierende Schicht 17 abgeschieden, deren Dicke die Breite des Spaltes 14 des Magnetkopfes bestimmt. Die Tatsache, daß bei Verwendung nur eines Leiters 12 zur Erzeugung des magnetischen Feldes ein großer Schreibstrom benötigt wird, ist bei der erfindungsgemäßen Anordnung sinnvoll berücksichtigt, weil der Querschnitt der Leiterbahn 12 weitgehend unabhängig von der sonstigen Geometrie der Schichtfolge wählbar ist. Man erreicht so eine Entkopplung von Leiterbahndicke und Stufenhöhe der Magnetschicht 18 und kann eine für den Wirkungsgrad des Kopfes vorteilhaft dicke Leiterbahn, d.h. einen möglichst großen Abstand zwischen den Magnetschichten außerhalb der Zonen 14 und 19, erreichen. Weiterhin sind Stufen in Magnetschichten stets der Ort für magnetische Domänen und hieraus resultierende Ummagnetisierungsverluste, für Streufelder und für Sättigungserscheinungen. Die sonst unvermeidliche zweite Kante auf der dem Spalt zugewandten Seite der Leiterbahn wird völlig vermieden.

R. 17619
4.2.1982 Rs/Hm

0086952

ROTERT BOSCH GMBH, 7000 STUTTGART 1


Ansprüche


1. Dünnschicht-Mehrspur-Magnetkopf, insbesondere zur
Aufzeichnung von Signalen auf einem magnetischen Aufzeichnungsträger, mit je einer ersten und einer zweiten
Magnetschicht, welche gemeinsam ein magnetisches Joch
bilden, und mit wenigstens einer zwischen den beiden
Magnetschichten hindurchgeführten Leiterbahn, wobei
eine der beiden Magnetschichten als magnetisches Substrat der Dünnschichtanordnung ausgebildet und mit je
einer Aussparung im Bereich jeder Spur versehen ist,
dadurch gekennzeichnet, daß in die Aussparung (16) eine
elektrische Leiterbahn (12) eingebettet ist, welche
durch eine elektrisch isolierende, harte Schicht (17)
abgedeckt ist, auf der die zweite, als Dünnschicht ausgebildete Magnetschicht (18) sitz, die einseitig (19)
mit dem Substrat (15) magnetisch kurzgeschlossen ist
und auf der gegenüberliegenden Seite mit dem Substrat
(15) dem magnetisch wirksamen Spalt (14) bildet.


2. Magnetkopf nach Anspruch 1, dadurch gekennzeichnet,
daß das magnetische Substrat (15) aus elektrisch
isolierendem Material besteht.


3. Magnetkopf nach Anspruch 1, dadurch gekennzeichnet,
daß das magnetische Substrat (15) aus elektrisch leitfähigem Material besteht und daß zwischen dem magnetischen Substrat (15) und der Leiterbahn (12) eine dünne

...

0086952

- 2 -

Isolationsschicht (22) liegt, vorzugsweise eine Schicht aus $SiO_2$ oder $Al_2O_3$.

4. Verfahren zur Herstellung eines Magnetkopfes nach einem der vorhergehenden Ansprüche, dadurch gekennzeichnet, daß die Leiterbahn (12) und/oder die dünne Magnetschicht (18) aufgedampft, durch Kathodenzerstäubung aufgestäubt oder galvanisch aufgebracht ist.

5. Verfahren zur Herstellung eines Magnetkopfes nach einem der Ansprüche 1 bis 3, dadurch gekennzeichnet, daß die Isolierschicht (17) aufgedampft ist.

6. Verfahren zur Herstellung eines Magnetkopfes nach einem der Ansprüche 1 bis 3, dadurch gekennzeichnet, daß die Aussparung (16) durch Ionenstrahlätzen hergestellt ist.

0086952

FIG.1

FIG.2

Europäisches
Patentamt

**EUROPÄISCHER RECHERCHENBERICHT**

**0086952**
Nummer der Anmeldung

EP  83 10 0422

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| P,X | EP-A-0 051 123  (IBM)<br>* Ansprüche  1, 2, 4, 5 ; Seiten 1-4 ; Figur 1 * | 1-4,6 | G 11 B    5/12<br>G 11 B    5/20 |
| A | Patent Abstracts of Japan Band 4, Nr. 18, 13. Februar 1980, Seite 35E171 & JP-A-54-157613 | 3 | |
| A | DE-A-2 242 095  (IBM)<br>* Ansprüche  4,  5 ; Seite 3, 2. Absatz * | 4,5 | |
| A | DE-B-2 407 633  (MATSUSHITA)<br><br>* Anspruch  1 ; Spalte 3, Zeilen 13-48 * | | |

**RECHERCHIERTE SACHGEBIETE (Int. Cl. ³)**

G 11 B    5/00

Der vorliegende Recherchenbericht wurde für alle Patentansprüche erstellt.

| Recherchenort | Abschlußdatum der Recherche | Prüfer |
|---|---|---|
| BERLIN | 28-04-1983 | LEITHAEUSER R |